# EUROPEAN PATENT APPLICATION

(11) **EP 1 077 555 A2**
(43) Date of publication of application: **21.02.2001**
(21) Application number: 00117744.3
(22) Date of filing: 17.08.2000
(51) Int. Cl.: H04L 9/32, H04L 9/08

(54) **Encrypting communication system and encrypting communication method**

(30) Priority: 18.08.1999 JP 23201099
(71) Applicant: NEC CORPORATION, Tokyo (JP)
(72) Inventor: Hiratsuka, Seichi, Minato-ku, Tokyo (JP)
(74) Representative: Betten & Resch

(57) **Abstract**

The object of the present invention is to make possible the realization of high security by generating a multi-stage encryption key in using fingerprint data and a comparison program. At the transmitter, a first encryption key is generated according to a correlation determination between fingerprint images from a fingerprint scanner 111 and initially registered fingerprint data, thereby encrypting and transmitting a message from the input/output apparatus 113, and at the receiving side, searching the initially registered characteristics that are registered in advance by the user, generating a second encryption key according to the results of the comparison to the examined characteristics, decrypting the examined characteristics using this second encryption key, and decrypting the encrypted message using the first encryption key obtained according to the results of comparison of these examined characteristics to the initially registered characteristics.

## Description

### Background of the invention

### Field of the invention

The present invention relates to an encrypting communication system and an encrypting communication method that encrypts and transmits a message using an encryption key produced using a fingerprint when carrying out communication via a communication line.

This specification is based on a Japanese Patent Application (Application No. Hei 11-232010), the content of which is described herein by reference.

### Description of the related art

In communication carried out via a communication line, passwords and data transmitted on the line, for example, may be stolen. This makes possible the occurrence of various types of crime. Thus, it is necessary to further intensify information security.

However, there are the problems that generally to the extent that information security is intensified, the architecture of the security system becomes complicated and inconvenient, and the system cost increases exponentially.

### Summary of the invention

In consideration of the above described a problem, it is the object of the present invention to provide an encrypting communication system that can realize at low-cost improvement of information security by generating a plurality of encryption keys based on fingerprint data and a comparison program using fingerprints, which are a physical characteristic.

In order to attain the above object, the encrypting communication system according to the present invention comprises a fingerprint scanner that extracts a fingerprint image; a characteristic extraction means that is provided in a transmitter data processing apparatus and that extracts examined characteristics from this fingerprint image; a first comparison means of the transmitter that compares these examined characteristics to initially registered characteristics that are, registered in advance in a memory apparatus; a first encryption key generating means that generates first encryption key when it has been determined according to the results of comparison by the first comparison means that the examined fingerprint is the fingerprint of one and the same person; a message encryption means of the transmitter that encrypts a message input from an input apparatus using the first encryption key; an initially registered characteristic decrypting means of the transmitter that decrypts the initially registered characteristics encrypted by a general algorithm; a second comparison means of the transmitter that compares the decrypted initially registered characteristics to the examined fingerprint; a second encryption key generating means of the transmitter that generates a second encryption key according to the results of comparison by the second comparison means; an examined characteristics encryption means of the transmitter that encrypts the examined characteristics using the seconded encryption key; an initially registered characteristics decrypting means of the receiver that is provided in the receiver data processing apparatus and that the encrypts initially registered characteristics that are identical to those stored in the memory apparatus of the transmitter using the same algorithm; a comparison means of the receiver that compares these decrypted initially registered characteristics to the examined fingerprint; an encryption key generation means of the receiver that generates a second encryption key according to the results of comparison by this comparison means; an examined characteristics decrypting means of the receiver that decrypts the examined characteristics received from this transmitter data processing apparatus using this generated second encryption key; a comparison means of the receiver that compares these decrypted examined characteristics to the initially registered characteristics; an encryption key generating means of the receiver that generates a first encryption key according to the results of comparison by this comparison means; and a message decrypting means of the receiver that decrypts the message received from the transmitter data processing apparatus using this first encryption key.

In addition, more preferably the encrypting communication system according to the present invention can optionally update and register the data of the initially registered characteristics of the transmitter and receiver.

In addition, more preferably in the encrypting communication system according to the present invention, the registration of the initially registered characteristics of the transmitter and receiver can be carried out by a transmission over a network.

In addition, more preferably in the encrypting communication system according to the present invention, registration of the initially registered characteristics of the transmitter and receiver can be carried out via a recording medium.

In addition, more preferably in the encrypting communication system according to the present invention, the first encryption key can be obtained based on a plurality of fingerprint images of the same finger from the fingerprint scanner

In addition, more preferably in the encrypting communication system according to the present invention, the transmitter data processing apparatus is formed by a dedicated processor having a tamper-free structure.

In addition, more preferably the encrypting communication system according to the present invention uses the input/output apparatus of a general-use processor as the input/output apparatus function of this dedicated processor.

In addition, more preferably at the transmitter, an encrypting communication method according to the present invention generates a first encryption key according to a determination as to whether or not the fingerprint image from the fingerprint scanner correlates with the initially registered a fingerprint data and encrypts and transmits a message from the input/output apparatus using this first encryption key; in addition, it decrypts the initially registered characteristics of the initially registered fingerprint data, compares the decrypted initially registered characteristics to the examined fingerprint, and encrypts and transmits the examined characteristics using a second encryption key generated according to the result of this comparison. At the receiver, the encrypting communication method according to the present invention retrieves and decrypts the initially registered characteristics registered in advance by the subject, generates a second encryption key according to the results of comparison between the decrypted initially registered characteristics and the examined characteristics, decrypts the examined characteristics by this second encryption key, and decrypts the encrypted message using the first encryption key obtained according to the results of comparison between these examined characteristics and the initially registered characteristics.

As described above, according to this invention, by generating fingerprint characteristic data and an encryption key having a high reliability by using a verification program, as long as the data and the program are not stolen, security is guaranteed, and in addition, even if fingerprint characteristic data is stolen, if updating of the fingerprint characteristic data is carried out frequently, the level of risk is low. In addition, there is also the effect that comparison using only registered characteristics is also possible, and the comparison score can be limited to a fixed number of bits.

In addition, according to the present invention, because the transmitter data processing apparatus is changed to a dedicated processor having a tamper-free structure, security can be increased to a higher level. In addition, according to this invention, because keyboards and display apparatuses are installed as standards on a general-use processor as the input/output apparatus means of the dedicated processor, there are the advantages that the function of the dedicated processor is simple and becomes more practical.

### Brief description of the drawings

Fig. 1 is a block diagram showing the encrypting communication system according to an embodiment of this invention.
Fig. 2 is a block diagram showing the encrypting communication system according to another embodiment of this invention.
Fig. 3 is a block diagram showing the encrypting communication system according to yet another embodiment of this invention.
Fig. 4 is a block diagram showing the encrypting communication system according to yet another embodiment of this invention.

### Preferred embodiments of the invention

### First embodiment

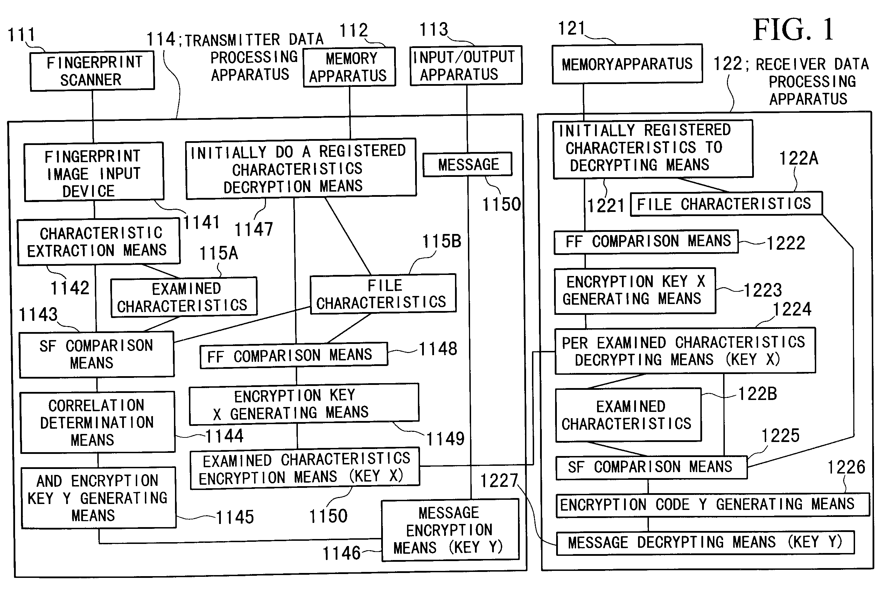

Below, first embodiment of the present invention will be explained referring to the figures. Fig. 1 is a block diagram showing the encrypting communication system according to this invention, and is divided into a message transmitter side and receiver side.

On the transmission side, a fingerprint scanner 111, a memory apparatus 112 that stores the information of the normally encrypted initially registered characteristics, an input/output apparatus 113 such as a keyboard or display, and a transmitter data processing apparatus 114 operated using programmed control are provided. On the receiving side, a memory apparatus 121 that stores information about initially registered characteristics identical to the above, and a receiver data processing apparatus 122 operated by programmed control are provided. In addition, in the transmitter data processing apparatus 114, 1141 denotes a fingerprint image input means that reads the fingerprint image from the fingerprint scanner 111, 1142 denotes a characteristic extraction means that extracts characteristics from the fingerprint image, and 1143 denotes an SF comparison means, which serves as the first comparison means, that compares the extracted examined characteristics 115A and the file characteristics (initially registered characteristics) 115B that have been registered in advance.

In addition, 1144 denotes a correlation determination means that determines whether the examined fingerprint and the file fingerprint are the fingerprint of one and the same person, 1145 denotes an encryption key Y generation means, which serves as the first encryption key generating means, that generates this encryption key Y when the finger is the same finger of one and the same person, 1146 denotes a message encrypting means that encrypts the message 115C input from the input/output apparatus 113 using the encryption key Y, 1147 denotes an initially registered characteristic decrypting means the retrieves and decrypts the initially registered characteristics registered in the memory apparatus 112 after being encrypted in advance using a general encryption algorithm, 1148 denotes an FF comparison means, which serves as this second comparison means, that compares the decrypted file characteristics 115B to the examined fingerprint, 1149 denotes an encryption key X generating means, which serves as the second encryption key generating means, that generates the encryption key X by using a comparison score output from the FF comparison means 1148, and 1150 denotes examined characteristic encrypting means that encrypts the examined characteristics 115A using encryption key X.

In the receiver data processing apparatus 122, 1221 denotes the initially registered characteristic decrypting means of the receiver which decrypts the completely identical initially registered characteristics registered in the memory apparatus 112 of the transmitter using an identical encryption algorithm, 1222 denotes an FF comparison means of the receiver identical to the FF comparison means 1148 of the transmitter, 1223 denotes the encryption key X generating means of the receiver that is identical to the encryption key X generating means 1149 of the transmitter, 1224 denotes the examined characteristics decrypting means of the receiver that decrypts the received examined characteristics using the encryption key X, 1225 denotes an SF comparison means, which serves as the comparison means of the receiver that is identical to that of the transmitter, that compares the decrypted examined characteristics 122B and the file characteristics 122A, 1226 denotes the encryption key Y generating means of the receiver, which is identical to that of the transmitter, that generates an encryption key using the comparison score output by the SF comparison means 1225, and 1227 denotes a message decrypting means that the decrypts the message received from the transmitter using the encryption key Y.

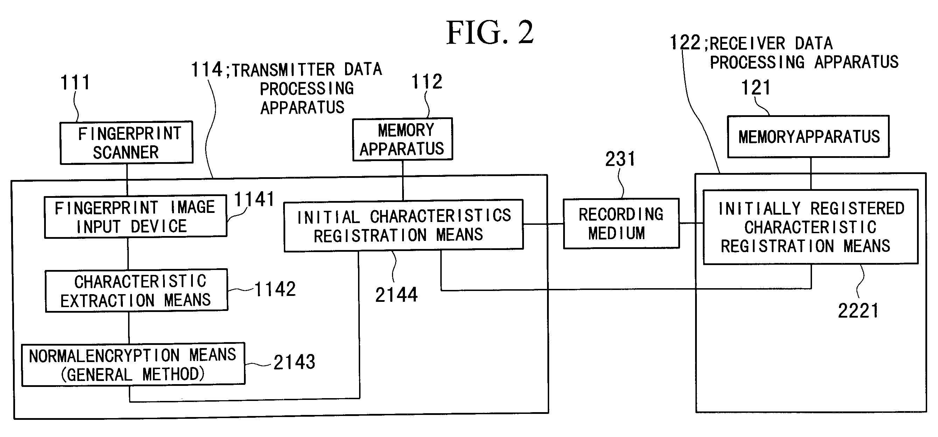

Next, the operation sequence will be explained using Fig. 1 and Fig. 2. Fig. 2 is a block diagram schematically showing the system for executing the registration sequence for the initially registered characteristics. According to this sequence, after each of the processes of fingerprint image input, characteristic extraction, and encryption are respectively carried out in the fingerprint image input means 1141, the characteristic extracting means 1142, and the normal encryption means 2143 using a general encryption algorithm, the fingerprint image read from the fingerprint scanner 111 registered by the initial characteristic registration means 2144 on a recording medium 231 such as the memory apparatus 112 of the transmitter or a floppy disk. In addition, identical initially registered characteristics are registered in the memory apparatus 121 of the receiver in an encrypted state. At this time, whether a recording medium 231 such as a floppy disk is used or there is direct registration in the transmitter using a network is determined by the situation regarding the system's use.

Next an operation sequence of the transmitting side will be explained in detail.

### User identification

The user whose fingerprint characteristics were initially registered in the memory apparatus 112 in Fig. 1 inputs fingerprint image from the fingerprint scanner 111 again, a comparison between this data and the initially registered characteristics is carried out, and if the user identification is not verified (i.e., it is not the same finger of the same user) in the correlation determining means 1144 based on the result of this comparison, the user cannot transmit a message using the terminal.

### Encrypting examined characteristics

When the user is verified in the correlation determination means 1144, in the transmitter data processing apparatus 114, examined characteristics used during verification by the examined characteristics encrypting means 1150 are encrypted using encryption key X as this second encryption key.

### Message input

When verified as the user, the user can input a message using a keyboard or display apparatus, which comprise the input/output apparatus 113. In addition, this message is encrypted using the encryption key Y as the first encryption key by the message encrypting means 1146.

### Sending the message

The user ID from the examined characteristics encrypting means 1150 is sent to the receiver along with the examined characteristics and the message from the message encrypting means 1146.

Next, the operation sequence on the receiving side is as follows.

### Receiving the message

At the receiving side, by means of the user ID, the initially registered characteristics registered in the memory apparatus 121 of the receiver in Fig. 1 are searched and compared to the examined characteristics by the FF comparison means 1222, and the encryption key X is generated by the encryption key X generating means 1223.

### Decrypting the examined characteristics

The examined characteristics received from the examined characteristics encrypting means 1150 are decrypted by the examined characteristics decrypting means 1224 using this generated encryption key X.

### Decrypting the message

The SF comparison means 1225 compares the decrypted examined characteristics 122B to the file characteristics 122A, which are the initially registered characteristics of the receiver decrypted using a normal encryption algorithm. The encryption key Y is derived by a the encryption key Y generating means 1226, and the message from the message encrypting means 1146 is decrypted by the message decrypting means 1227 using this encryption key Y.

In this case, it is important that even the finger is the same finger of one and the same person, at the level of characteristics, this identity may not be detected. The fingerprint scanner 111 is an optical system and accumulates static electricity, and when the position of the finger and the pressure, for example, are different, in actual use the fingerprint cannot be input under identical conditions. Of course, the comparison algorithm offsets this lack of repeatability. Therefore, from the point of view of security this lack of repeatability, contrariwise, is extremely valuable information. In addition, as described below, as with updating passwords, by updating registered characteristics, it is possible to increase the security. Furthermore, when initially registered characteristics are used for a long period of time, in the case that the data and the associated program are stolen, the security cannot be maintained. Therefore, registered characteristics must be frequently updated. The update sequence is identical to the sequence of transmitting a message, and if there is a command to exchange registered characteristics in the message, the examined characteristics replace the initially registered characteristics.

Therefore, according to this embodiment, by generating an encryption key having high reliability using fingerprint characteristic data and a comparison program, the initially registered characteristics do not need to be transmitted over a network, and security can be guaranteed as long as neither the data nor the program are stolen. In addition, even if the fingerprint characteristic data is stolen, the risk is low if updating of the fingerprint characteristics data is carried out frequently. In addition, with this invention, comparison can be carried out using only registered characteristics, and thus the comparison score can be limited to a specified number of bits. The comparison score differs depending on the distribution of the characteristics, and even with a comparison using the same finger of one and the same person, in the course of inputting fingerprints the probability that characteristics having the same score will be generated is near zero. In addition, when the highest value of the examined score is determined, setting the score within about the largest valued becomes possible. Thereby, the length of the encryption key can be limited.

Furthermore, with this invention, setting encryption keys having a plurality of steps becomes possible. As described above, a two-step method using an encryption key X and an encryption key Y as a two-step encryption key was used as an example. However, if the image input of the same finger from the fingerprint scanner 111 is carried out N-times, the encryption key Y can be generated N-times: Y1, Y2,..., YN. If the first characteristic is encrypted with encryption key X, the second characteristic is encrypted with encryption key Y1, the third characteristic is encrypting with encryption key Y2, and the N^{th} characteristic is encrypted with encryption key Y (N - 1), the message can be encrypted using encryption keys YN. Using this kind of multi-step encryption key generating method requires processing time, but the message cannot be accessed as long as the registered characteristic data, the message in the network, and the program associated with comparison are not stolen.

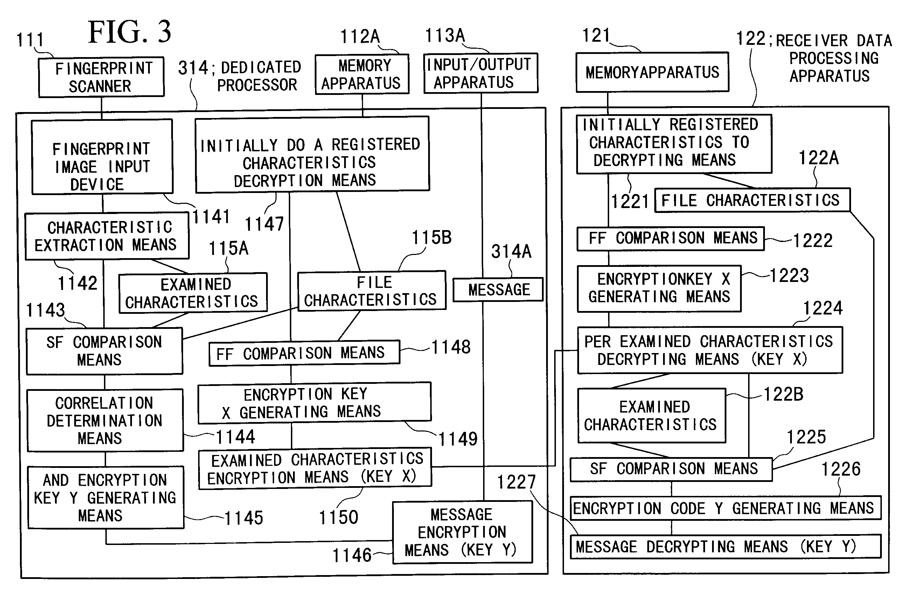

Fig. 3 shows another embodiment of the invention. In this embodiment, the data processing apparatus 114 of the transmitter in Fig. 1 is replaced with a dedicated processor 314. Because this dedicated processor 314 has a tamper-free structure, security is further enhanced. However, a non-volatile memory such as ROM is necessary for the initially registered characteristics 112A, and an input/output apparatus 113A having a liquid crystal panel is necessary as the input output apparatus. The operation of this embodiment is identical to the operation explained above, but because the transmitter is a tamper-free dedicated processor 314, the initially registered characteristic data of the transmitter and the programs associated with comparison cannot be read.

### Second embodiment

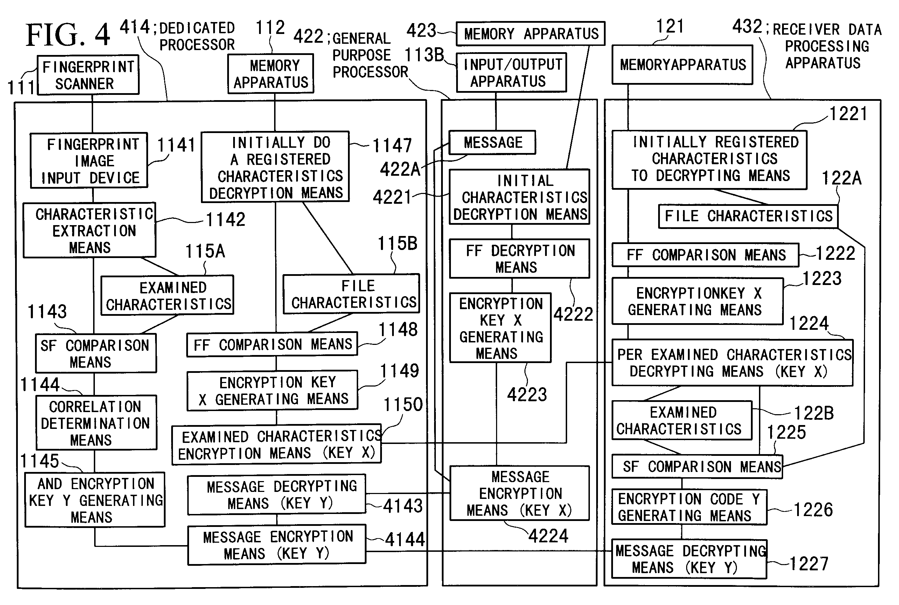

Fig. 4 shows another embodiment of the present invention. In contrast to providing an input/output apparatus 113A in the dedicated processor 314 in Fig. 3, the dedicated processor 414 has a structure wherein an independent general purpose processor, that is, dedicated processor 422, using a standard keyboard and display apparatus as the input and output apparatus 113B, and the other basic structures and operations are substantially identical to those shown in Fig. 3. However, in this embodiment, in order to input the message 422A from the general-purpose processor 422, encrypting by encryption key X is carried out by message encrypting means 4224, and the message is sent to the dedicated processor 414. The dedicated processor 414 decrypts the received message in the message decrypting means 4143 using the encryption key X, and then encrypts the message in the message encryption means 4144 using the encryption key Y. In addition, the message encrypted in this manner is sent to the general-purpose processor 432, which is on the side at which the message is received, via the general-purpose processor 422. Moreover, the initially registered characteristics must be registered in advanced in the memory apparatus 423 of the dedicated processor 422 and in the memory apparatus 121 of the general-purpose processor 432. Therefore, by using this kind of dedicated processor 422, the function of the dedicated processor 414 is simplified and becomes more practical.

## Claims

1. An encrypting communication system characterized in providing:
a fingerprint scanner that inputs fingerprint images
a characteristic extracting means that is provided in a transmitter data processing apparatus and that extracts examined characteristics from said fingerprint image;
a first comparison means of the transmitter that compares said examined characteristics to initially registered characteristics that are registered in advance in a memory apparatus;
a first encryption key generating means that generates a first encryption key when the examined fingerprint has been determined to be the fingerprint of the same finger of one and the same person according to the results of comparison by this first comparison means;
a message encrypting means of the transmitter that encrypts a message input from an input/output apparatus using said first encryption key;
an initially registered characteristic decrypting means of the transmitter that decrypts said initially registered characteristics encrypted by a general algorithm;
a second comparison means of the transmitter that compares the decrypted initially registered characteristics to said examined fingerprint;
a second encryption key generating means of the transmitter that generates a second encryption key according to the results of the comparison by this second comparison means;
an examined characteristic encrypting means of the transmitter that encrypts said examined characteristics using said second encryption key;
an initially registered characteristic decrypting means of the receiver that is provided in the receiver data processing apparatus and that decrypts the initially registered characteristics that are identical to those stored in said memory apparatus on the transmitter using said algorithm;
a comparison means of the receiver that compares these decrypted initially registered characteristics to said examined fingerprints;
an encryption key generating means of the receiver that generates the second encryption key according to the results of this comparison by the comparison means;
an examined characteristics decrypting means of the receiver that decrypts the examined characteristics received from said transmitter data processing apparatus using this generated second encryption key;
a comparison means of the receiver that compares these decrypted examined characteristics to said initially registered characteristics;
an encryption key generating means of the receiver that generates the first encryption key according to the results of the comparison by this comparison means; and
a message decrypting means of the receiver that decrypts the message received from said transmitter data processing apparatus using this first encryption key.

2. An encrypting communication system according to claim 1 characterized in allowing optional updates and registration of said initially registered characteristics at the transmitter and receiver.

3. An encrypting communication system according to claim 1 or 2 characterized in that the registration of initially registered characteristics at said transmitter and said receiver is carried out by communication over a network.

4. An encrypting communication system according to claim 1 or 2 characterized in that the registration of initially registered characteristics of said transmitter and said receiver is carried out via a recording medium.

5. An encrypting communication system according to one of claims 1 to 4 characterized in that said first encryption key is obtained based on a plurality of fingerprint images of the same finger from said fingerprint scanner.

6. An encrypting communication system according to one of claims 1 to 5 characterized in that said transmitter data processing apparatus is structured by a dedicated processor having a tamper-free structure.

7. An encrypting communication system according to claim 6 characterized in using the input/output apparatus function of a general-purpose processor as the input/output apparatus function in said dedicated processor.

8. An encrypting communication method characterized in, at the transmitter, generating a first encryption key according to a correlation determination between a fingerprint from a scanner and initially registered fingerprint data, encrypting and transmitting a message from an input/output apparatus using this first encryption key, and at the same time, decrypting said initially registered characteristics of fingerprint data that has been initially registered, comparing the decrypted initially registered characteristics to the examined fingerprint, and encrypting and transmitting the examined characteristics using a second encryption key generated according to the results of this comparison, and at the receiver, searching and decrypting initially registered characteristics that are registered in advance by the user, generating the second encryption key according to the results of the comparison between the decrypted initially registered characteristics and the examined fingerprint, decrypting the examined characteristics using this second encryption key, and decrypting said encrypted message using a first encryption key obtained according to the results of comparing this examined characteristic to said initially registered characteristics.
